# EUROPÄISCHE PATENTANMELDUNG

(11) **EP 0 995 370 A1**
(43) Veröffentlichungstag der Anmeldung: **26.04.2000**
(21) Anmeldenummer: 99116495.5
(22) Anmeldetag: 23.08.1999
(51) Int. Cl.: A47B 57/40, F16B 12/18

(54) **Zuganker**

(30) Priorität: 19.10.1998 DE 19848055
(71) Anmelder: PAN-BRASILIA WERK GMBH, 68623 Lampertheim (DE)
(72) Erfinder: Lauwe, Kurt-Jürgen, 46514 Schermbeck (DE); Mechnich, Harald, 67227 Frankenthal (DE); von Rolbicki, Wolfgang, 28215 Bremen (DE)
(74) Vertreter: Zellentin, Wiger, Dipl.-Ing.

(57) **Zusammenfassung**

Die vorliegende Erfindung betrifft einen Zuganker für einen Schrank oder eine Schrankwand, welcher vordere und hintere mit einem Bohrungs- oder Schlitzraster versehene Pfosten aus Metall sowie vertikale Schrankseiten und tragende Konstruktionsböden aufweist, sowie an den Böden Leisten, in welchen die Zuganker angeordnet sind und über welche die Böden mit den Pfosten verbindbar sind, bei welchem erfindungsgemäß der Zuganker aus zwei Zugelementen mit einem dazwischen angebrachten Spannelement besteht, über welche die Zugelemente aufeinander zubewegbar sind; das Spannelement einen Ansatz aufweist, der über eine Öffnung in der Leiste betätigbar ist und der das Spannelement verformt; in den Pfosten greifen Krallen ein, die ein nach oben gerichtetes Hakenteil aufweisen, die Zugelemente sind mit in die Hakenteile eingreifenden Ösen versehen, und die Leisten weisen beidendig Ausnehmungen auf und sind über die Hakenteile schiebbar.

## Beschreibung

Die vorliegende Erfindung betrifft einen neuartigen Zuganker für einen Schrank oder eine Schrankwand.

Derartige Zuganker dienen dazu, einen oder mehrere Böden zwischen den senkrechten Pfosten der Schränke zu verspannen, um die Konstruktion auszusteifen. Dazu weisen die Böden an den Stirnseiten Leisten (aus insbesondere Aluminium-Hohlprofil) auf, in denen die Zuganker liegen, welche die Pfosten durchgreifen, um sie entweder zum nächsten Schrank hin zu verlängern oder sie über die Leisten jeweils endseitig zu spannen, um so die Böden an die Pfosten zu pressen und einen hochstabilen Verbund auch mit den Nachbarschränken herzustellen, siehe z. B. EP 0 330 748 B1.

Diese Vorgehensweise hat folgenden Nachteil. Um ein Schrankelement aus einer Schrankwand herauszulösen, muß entweder der gesamte Verbund aufgeschraubt und es müssen sämtliche Zuganker vollständig herausgezogen werden, oder aber es müssen die Anker zwischen den Nachbarschränken aufgetrennt, d. h. zerstört werden. Im letzteren Falle ist ein Gesamtverbund nicht mehr herstellbar.

Aus der DE 26 38 278 C2 ist weiterhin ein Zuganker, bestehend aus zwei Zugelementen, zum Befestigen von Möbelböden bekannt. Dieser besteht aus einer Seilanordnung, bei welcher auf der Möbelrückseite sich zwei Seilabschnitte eines für Front- und Rückseite einzigen Seiles wenigstens einmal diagonal kreuzen. Die Seilspannung wird durch ein Spannschloß bewirkt. Nachteilig ist dabei die wenig ansprechende Gestaltung und die Notwendigkeit, bei Nachlassen der Seilspannung durch Materialermüdung das Schloß nachspannen zu müssen. Der Verbund ist wegen der Seilelastizität nicht starr, das so verstellte Möbel ist zur Aufnahme höherer Lasten daher nur wenig geeignet.

Die vorliegende Erfindung hat sich daher die Aufgabe gestellt, einen Zuganker zu schaffen, der diese Nachteile nicht aufweist bzw. mit welchem ein einzeln lösbarer Zugankerverbund herstellbar ist.

Die Lösung dieser Aufgabe besteht in einem Zuganker für einen Schrank oder eine Schrankwand, welcher vordere und hintere mit einem Bohrungs- oder Schlitzraster versehene Pfosten aus Metall und vertikale Schrankseiten und tragende Konstruktionsböden aufweist, sowie an den Böden Leisten, in welchen die Zuganker angeordnet sind und über welche die Böden mit den Pfosten verbindbar sind, bei welchem erfindungsgemäß der Zuganker aus zwei Zugelementen mit einem dazwischen angebrachten Spannelement besteht, über welche die Zugelemente aufeinander zubewegbar sind. Das Spannelement weist einen Ansatz, z. B. eine Gewindeschraube, auf der über eine Öffnung in der Leiste betätigbar ist und der das Spannelement verformt; in die Pfosten greifen Krallen ein, die ein nach oben gerichtetes Hakenteil aufweisen. Die Zugelemente sind mit in die Hakenteile eingreifenden Ösen versehen und die Leisten weisen beidendig Ausnehmungen auf und sind mit Hilfe dieser über die Hakenteile schiebbar.

Die Funktion des erfindungsgemäßen Zugankers ist folgende. Zunächst werden die Krallen in gewünschter Höhe in das Lochraster der Pfosten entweder allein an der Vorderseite oder auch in die hinteren Pfosten eingefügt. Danach wird der Fachboden auf die Krallen gebracht und abgesenkt, wobei die Ausnehmungen der an den Stirnseiten der Fachböden angeordneten Leisten über die Krallen gelangen und sich die Ösen der Zugelemente über die Hakenteile der Krallen legen. Das Hakenteil kann dabei soweit nach oben ragen, daß die Leiste und damit der Boden auf dem Hakenteil aufliegen, dieses somit einen Anschlag bildet.

Nach dem Einfügen des Bodens wird das Spannelement betätigt, wobei sich die endseitigen Ösen der Spannelemente aufeinander zubewegen und Zug auf die Krallen in einem durch deren Länge und deren Verkürzung vorgegebenen Maß Zug auf die Pfosten ausüben, d. h. die Böden gegen diese spannen.

Bei den benachbarten Schränken wird analog vorgegangen, d. h. die Krallen insbesondere in gleicher Höhe gegenüberliegend zum Zuganker des bereits mit diesem versehenen Schrank in das Pfostenraster eingefügt und in den Leisten der entsprechenden Böden gespannt, d. h. die Schränke werden über die Seitenflanken der Pfostenprofile miteinander verbunden.

Die Krallen besitzen dabei vorzugsweise obere und untere Anlageflächen, mit denen sie am Profil flächig anliegen, um derart genügend Kraft auf das Profil übertragen zu können. Dabei liegt die obere Anlagefläche der Kralle innen am Pfosten an und die untere außen.

Die Zuganker können in Form von zwischen den Ösen angeordneten Stahlseilen ausgebildet sein und z. B. über einen Exzenter gespannt werden, wozu die Seile nahe diesem über ausgerundete Gleitflächen oder Rollen oder dergleichen umgelenkt werden, um die hierdurch bewirkte Verkürzung zu vergrößern.

Insbesondere weisen die Zugelemente eine Stangenform auf, wobei mittig die Spannelemente angeordnet sind und in in die Leisten eingefügte Führungen eingreifen, die hierzu entsprechende Längsbohrungen tragen, so daß die an deren Enden befindlichen Ösen etwa mittig (koaxial) in den Leisten liegen.

Weiterhin wird vorgeschlagen, an den Enden der Zugelemente in den Leisten verschiebbare Blöcke anzuordnen, die mit den Spannelementen verbunden sind und in die die Zugelemente einhängbar sind. Dazu besitzen diese bei Vorliegen einer Stangenform endseitige Umbiegungen und/oder Verbreiterungen, die in entsprechende Kehlen der Blöcke eingefügt werden und derart beide Teile fest miteinander verbinden.

Wie oben erwähnt, können die Spannelemente (kurze) Seilstücke sein, die von einem an der Leiste befindlichen Ansatz aus der Mittellage gebracht werden, um die gewünschte Spannung zu erzielen. Insbesondere besteht das Spannelement vorliegend aus mindestens zwei Kettengliedern, an deren Mitte der Ansatz (z. B. ein Exzenter) angreift und die Kette einknickt. Dabei ist der Ansatz in besonders einfacher Weise eine Schraube, die über einen Gewindeeinsatz in der Leiste gehalten ist und die beim Einschrauben die Kette verformt, d. h. den Abstand zwischen den Ösen verkürzt.

Die Verwendung der vorliegenden Zuganker erlaubt nicht nur das Herauslösen einzelner Schrankwandelemente, sie führt darüber hinaus auch zu einer erheblichen Verkürzung der Montagezeiten.

Anhand der beiliegenden Figuren wird die vorliegende Erfindung näher erläutert.

Dabei zeigen
- **Figur 1**: einen Schnitt durch einen Pfosten und das Einhängen der Öse in die Kralle,
- **Figur 2**: einen Schnitt durch eine Bodenleiste mit einem kettenförmigen Spannelement und
- **Figur 3**: die Ösenanordnung in Draufsicht.

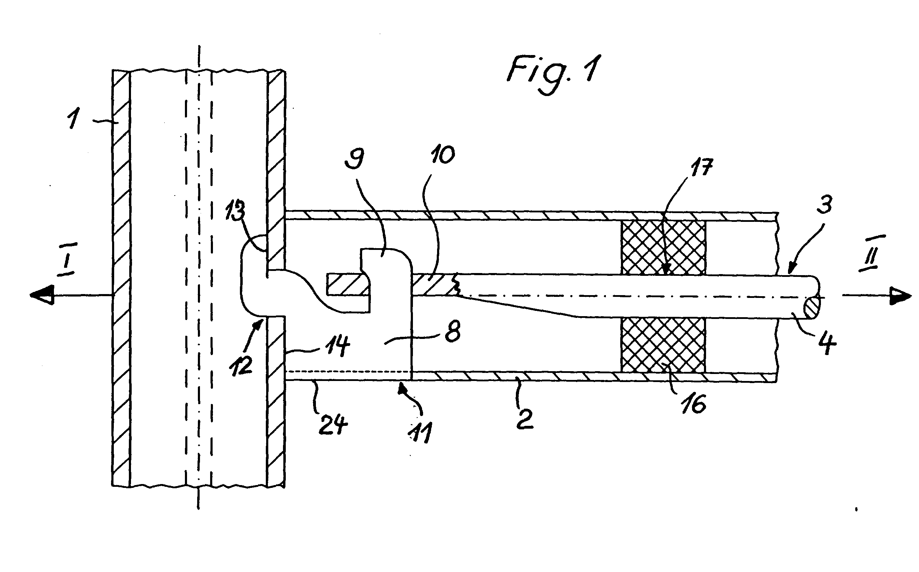

In **Figur 1** ist ein senkrecht stehender Pfosten 1 aus Aluminium-Rechteckprofil gezeigt, der mit einem Raster übereinanderliegender Bohrungen oder Schlitze 12 versehen ist. In einen solchen Schlitz 12 ist eine Kralle 8 eingehängt, die eine äußere untere 14 und eine obere, innenliegende Anlagefläche 13 aufweist, die beide nach Anbringen der Kralle 8 satt an den Flanken des Pfostens 1 anliegen.

Gegenüberliegend ist das Hakenteil 9 an die Kralle 8 angeformt.

Auf die Kralle 8 ist die mit einem Boden des Schrankes verbundene Leiste 2 dargestellt. Diese weist im Bereich der Kralle 8 bzw. von dessen Hakenteil 9 eine Ausnehmung 11 auf so daß die Leiste 2 beidendig auf die Kralle 8 aufgeschoben werden kann.

Die Kralle 8 ist dabei vorliegend so ausgeführt, daß ihr Sockel 24 die Öffnung 11 der Leiste 2 verschließt.

In der Leiste 2 befinden sich die Zugelemente 4, die endseitig in einer Führung 16 ruhen, wobei deren Öse 10 über das Hakenteil 9 greift. Durch die Führung 16 ist es ohne weiteres möglich, die Lage der Leiste 2 bzw. des mit dieser verbundenen Bodens in der Höhe auch über diese vor dem Spannen der Zugelemente 4 festzulegen, da die Öse 10 auf dem Hakengrund auflegen kann. Alternativ oder zusätzlich kann das Hakenteil 9 zur Auflage der Leiste 2 auf diesem entsprechend hochgezogen sein, um so die Zugkräfte beim Spannen des Zugankers gegenüber der Bohrung oder dem Schlitz 12 zu vermitteln.

Die Pfeile I und II deuten bei beidseitiger Montage von Böden die auf den Pfosten 1 einwirkenden Zugrichtungen an, wobei der Pfeil I für eine hier eingehängte Kralle steht.

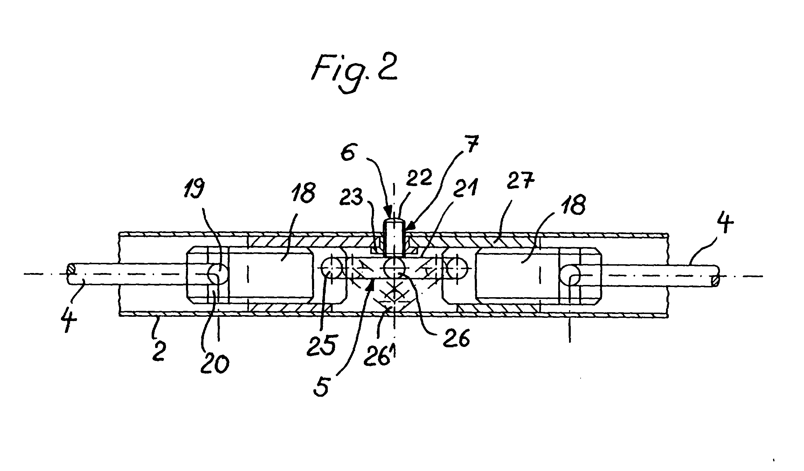

**Figur 2** zeigt das in der Vierkantleiste 2 liegende Spannelement 5. Dieses besteht vorliegend aus zwei Kettengliedern 21, wobei deren Endgelenke 25 in Blöcke 18 eingehängt sind und auf das mittlere Gelenk 26 als Ansatz 6 für die Betätigung des Spannelements 5 eine Schraube 22 einwirkt, die in einem mit der Leiste 2 verbundenen Gewindeeinsatz 23 als Öffnung 7 der Leiste 2 kämmt. Gestrichelt ist die eingeknickte Position der Kettenglieder 21 gezeigt, wobei das mittlere Gelenk 26 die Position 26' einnimmt. Der Hohlraum innerhalb der Leiste 2 läßt einen so großen Knickweg für das mittlere Gelenk zu, daß bei der erforderlichen Toleranz zwischen Hakenteil 9 und Öse 10 (Fig. 1) eine mehr als ausreichend große Zugspannung zwischen den Holmen 1 (Fig. 1) herstellbar ist.

Die Blöcke 18 weisen außenliegende Kehlen 20 auf, in welche endseitige Umbiegungen 19 der stangenförmigen Zugelemente eingehängt sind, über welche die Kräfte von den Blöcken 18 auf diese übertragen werden. Die Blöcke 18 selbst laufen verkantungsfrei und reibungsarm in Hülsen 27.

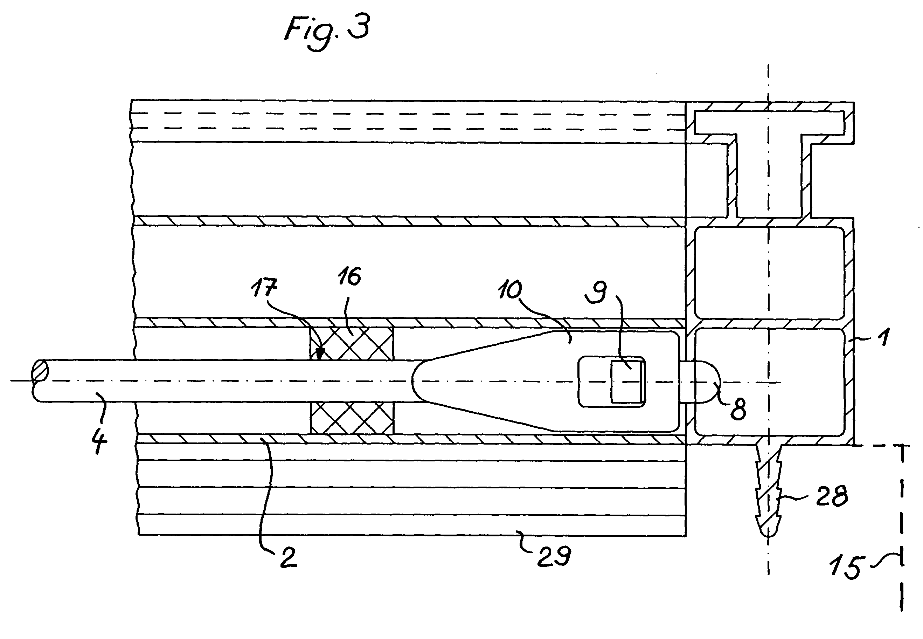

In **Figur 3** letztlich ist die Öse 10 in Draufsicht dargestellt, sie ist derart verbreitert, daß ihre Außenflanken innen an den Leistenwandungen anliegen, so daß diese hierdurch und durch die Führung 16 mit ihrer Längsbohrung 17 sauber in der Leiste 2 fluchtet.

Die Führung 16 kann dabei den Zuganker festlegen, so daß die Öse 10 vor der Montage, d. h. bei entspanntem Zuganker zum Aufbringen auf das Hakenteil 9 fixiert ist.

Der Pfosten 1 ist ein Mehrkammerprofil und weist einen Dübel 28 auf der in eine entsprechende Bohrung des Bodens 5 eingreift, der auf der an die Leiste 2 eingeformten Zunge 29 aufliegt, so daß er grundsätzlich mit dieser nicht verschraubt zu werden braucht.

### Bezugszeichenliste

- 1: Pfosten
- 2: Leisten
- 3: Zuganker
- 4: Zugelemente
- 5: Spannelemente
- 6: Ansatz
- 7: Öffnung
- 8: Kralle
- 9: Hakenteil
- 10: Öse
- 11: Ausnehmungen
- 12: Schlitze
- 13: obere Anlagefläche
- 14: untere Anlagefläche
- 15: Boden
- 16: Führung
- 17: Längsbohrung
- 18: Block
- 19: Umbiegung
- 20: Kehle
- 21: Kettenglied
- 22: Schraube
- 23: Gewindeeinsatz
- 24: Sockel
- 25: Endgelenk
- 26, 26': mittleres Gelenk
- 27: Hülsen
- 28: Dübel
- 29: Zunge

## Patentansprüche

1. Zuganker für einen Schrank oder eine Schrankwand, welcher vordere und hintere mit einem Bohrungs- oder Schlitzraster versehene Pfosten (1) aus Metall sowie vertikale Schrankseiten und tragende Konstruktionsböden aufweist, sowie an den Böden Leisten (2) in welchen die Zuganker (3) angeordnet sind und über welche die Böden mit den Pfosten (1) verbindbar sind, **gekennzeichnet** durch die folgenden Merkmale
a) der Zuganker (3) besteht aus zwei Zugelementen (4) mit einem dazwischen angebrachten Spannelement (5) über welche die Zugelemente (4) aufeinander zu bewegbar sind;
b) das Spannelement (5) weist einen Ansatz (6) auf der über eine Öffnung (7) in der Leiste (2) betätigbar ist und der das Spannelement (5) verformt;
c) in den Pfosten (1) greifen Krallen (8) ein, die ein nach oben gerichtetes Hakenteil (9) aufweisen, die Zugelemente (4) sind mit in die Hakenteile (9) eingreifenden Ösen (10) versehen;
d) die Leisten (2) weisen beidendig Ausnehmungen (11) auf und sind über die Hakenteile (9) schiebbar.

2. Zuganker nach Anspruch 1, **dadurch gekennzeichnet,** daß die Krallen (8) in die Schlitze (12) des Schlitzrasters der Pfosten (1) einführbar sind und obere (13) sowie untere (14) Anlageflächen aufweisen, die am Pfosten (1) innen und außen anliegen.

3. Zuganker nach Anspruch 1 oder 2, **dadurch gekennzeichnet,** daß die Zugelemente (4) stangenförmig ausgebildet und in in die Leisten (2) der Böden (15) eingesetzten Führungen (16) geführt sind, die hierzu Längsbohrungen (17) aufweisen.

4. Zuganker nach einem oder mehreren der Ansprüche 1 bis 3, **dadurch gekennzeichnet,** daß die Zugelemente (4) in endseitig angeordneten, in den Leisten (2) verschiebbaren Blöcken (18) eingefügt sind, wobei die Spannelemente (5) an diesen Blöcken (18) angreifen.

5. Zuganker nach Anspruch 4, **dadurch gekennzeichnet,** daß die Zugelemente (4) endseitige Umbiegungen (19) oder Verbreiterungen aufweisen, die in Kehlen (20) der Blöcke (18) einhängbar sind.

6. Zuganker nach Anspruch 1, **dadurch gekennzeichnet,** daß die Spannelemente (5) aus mindestens zwei Kettengliedern (21) gebildet sind, die von dem Ansatz (6) eingeknickt werden.

7. Zuganker nach einem oder mehreren der Ansprüche 1 bis 6, **dadurch gekennzeichnet,** daß der Ansatz (6) eine Schraube (22) ist, die über einen Gewindeeinsatz (23) in den Leisten (2) gehalten ist.
